Europäisches Patentamt

European Patent Office

Office européen des brevets

(11) Publication number: **0 212 654 B1**

## EUROPEAN PATENT SPECIFICATION

(45) Date of publication of patent specification: **27.10.93**

(51) Int. Cl.⁵: **H04M 3/42**, H04M 15/00, H04Q 3/00

(21) Application number: **86111774.5**

(22) Date of filing: **26.08.86**

(54) **Method and apparatus for disallowing the extension of a call through a network.**

(30) Priority: **30.08.85 US 771557**

(43) Date of publication of application:
**04.03.87 Bulletin 87/10**

(45) Publication of the grant of the patent:
**27.10.93 Bulletin 93/43**

(84) Designated Contracting States:
**DE GB SE**

(56) References cited:
**EP-A- 0 088 639      WO-A-81/02085**
**US-A- 3 484 560      US-A- 3 624 613**
**US-A- 4 162 377      US-A- 4 313 035**

**PROCEEDINGS OF THE NATIONAL ELEC-
TRONICS CONFERENCE, Oak Brook, Illinois,
US, 1st October 1981, vol. 37, pages 151-152;
J.R. MAZOR: "Billing customers for carriers"**

(73) Proprietor: **AMERICAN TELEPHONE AND
TELEGRAPH COMPANY
550 Madison Avenue
New York, NY 10022(US)**

(72) Inventor: **Fodale, Joseph Vito
7 Colonial Way
Lincroft New Jersey 07738(US)**

(74) Representative: **Blumbach Weser Bergen
Kramer Zwirner Hoffmann Patentanwälte
Sonnenberger Strasse 100
D-65193 Wiesbaden (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

Technical Field

This invention relates generally to telecommunications networks and more particularly to method and apparatus for disallowing the connection of a call through a network when the billing number involved with the call has a predetermined status.

Background of the Invention

In the past, when a customer was delinquent in the payment of telephone call charges, the local telephone company would commonly disconnect the customer's line or not provide the customer with dial tone until the delinquent charges were paid.

All local telephone companies were required to give their customers equal access to all interconnect carriers. That is, each interconnect carrier can be accessed by dialing the same number of digits. The local telephone company can still disconnect a customer's line for the delinquent payment of local telephone call charges. However, not all government regulators allow the local telephone companies nor do the local telephone companies desire to disconnect a customer's line for the delinquent payment of long distance interconnect carrier charges, particularly when the payment of local telephone call charges is not delinquent.

As a result, the interconnect carriers face the problem of how to deny long distance service or disallow the connection of a long distance call through their network when the calling customer is delinquent in the payment of long distance telephone call charges.

US-A 4,162,377 discloses arrangements for a centralized check of calling card numbers wherein a common channel signaling message is used to query a data base to determine if a calling card number being used on a call has been disallowed, for example, for failure to pay for telecommunication service.

Summary of the Invention

The foregoing problems are solved and a technical advance is achieved by an illustrative embodiment of the invention in a method of and apparatus for disallowing the connection of a call originated by a calling customer through an interconnect network when the billing number of the calling customer line has a delinquent payment status. The interconnect network serves a plurality of local offices and customers and has a toll office for processing calls through the network toward a destination and also advantageously has a data base for the customers that stores the delinquent payment status of the customer's billing numbers. In response to a call from a calling customer, either a switching or operator system included in the toll office sends the billing number involved with the call to the data base to determine the payment status of the billing number involved with the call. The data base returns a reply message to the switching or operator system advantageously to disallow the connection of the call through the network when the payment status of the billing number involved with the call is delinquent.

The data base is capable of sending another reply message to the switching or operator system included in the network to allow the connection of the call through the network when the billing number has a payment status indicating, for example, that network charges have been paid in a timely manner.

A broad feature of this invention is the switching system sending to the data base the billing number involved with a call to determine the payment status of the billing number and receiving a reply message when the payment status of the billing number is delinquent.

A second broad feature of this invention is the data base obtaining the status of the billing number involved with a call originated by a customer and controlling the disallowance of the call through the network when the billing number involved with the call is in a list of billing numbers having a delinquent payment status.

A third broad feature of this invention is the provision of an operator system for sending the billing number involved with a call originated by a customer to the data base and providing call handling services based on the reply message received from the data base and information received from the customer.

The method includes determining the status of the billing number involved with the call from the data base in response to a call and disallowing the connection of the call through the network when the billing number has a predetermined status such as delinquent payment.

The method further includes allowing the connection of the call through the network when the billing number involved with the call has another predetermined status such as other than delinquent payment.

2

An adjunct feature is announcing to the calling customer the disallowance of the call through the network when the billing number has the delinquent payment status.

In accordance with another feature of this invention when the call is disallowed, a second billing number may be received from the calling customer to allow the connection of the call through the network when the second billing number has a status indicating, for example, that network charges have been paid in a timely manner. For example, this allows the calling customer to provide alternate billing arrangements such as charging the call to a calling or credit card to allow the connection of the call through the network when the call is initially disallowed.

Determining the status of the billing number involved with a call includes sending the billing number to the data base in response to the call, interrogating the data base for the status of the billing number; and sending a reply message from the data base to disallow the connection of the call through the network when the billing number has, for example, a delinquent payment status.

Another feature of this invention is the ability to store and change the status of the billing numbers in the data base from, for example, a remotely located accounting office.

A specific embodiment of this invention is used with a toll telecommunications network having a switching system for switching calls between local or other nonaffiliated networks that serve a plurality of customers. A list of billing numbers having a delinquent payment status is stored in a data base included in the toll network. The method of disallowing the connection of a call originated by a calling customer through the toll network includes sending a query message with the billing number involved with the call from the switching system to the data base in response to the call. In response to the query message, the data base list is searched for the billing number involved with the call, and a "deny call" reply message is sent to the switching system to disallow the connection of the call through the toll network when the billing number involved with the call is in the data base list. Upon receipt of the "deny call" reply message, the switching system disallows the connection of the call through the network.

The connection of a call through the network from a calling customer will be allowed when the call is received on the termination of a predetermined trunk included in the network. In addition, the call will also be allowed through the network when the call is to or from a customer line having a predetermined identification number.

An operator system may also be included in the network for processing calls through the network. As such, the method also includes searching the list of delinquent payment status billing numbers in the data base and selectively allowing and disallowing the connection of a call through the network from the operator system depending on whether or not the billing number involved with the call is in the list of billing numbers having the delinquent payment status.

After the call has been initially disallowed, the method further includes searching the data base list for a second billing number received from the calling customer. When the second billing number is not in the delinquent payment status billing number list, the data base sends an "allow call" reply message to the operator system which allows the connection of the call through the network.

The data base of the invention serves a plurality of switching offices that process calls for a plurality of customers. The data base comprises means responsive to the billing number involved with a call from a calling customer for obtaining the status of the billing number and means responsive to the obtained status for effecting the disallowance of a call originated by the calling customer through the network.

Brief Description of the Drawing

The invention may be better understood from the following detailed description when read with reference to the drawing in which:

FIG. 1 depicts an illustrative telecommunications interconnect carrier network;

FIGS. 2 through 4 depict a flow diagram illustrating the principles of the method of the invention implemented in the toll interconnect carrier network illustrated in FIG. 1;

FIG. 5 depicts an illustrative query message format; and

FIG. 6 depicts an illustrative reply message format.

Detailed Description

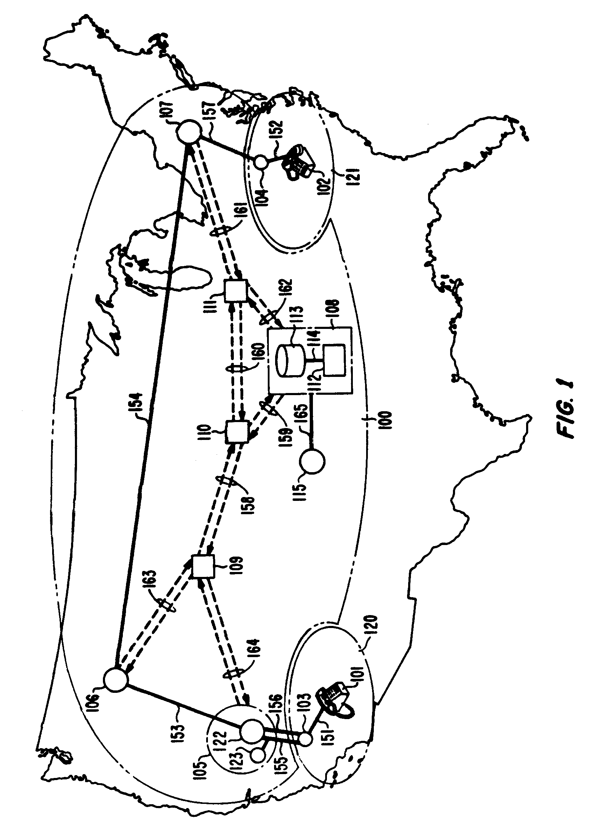

Depicted in FIG. 1 is an illustrative toll telecommunications network 100. This toll network includes illustrative apparatus for and utilizes an illustrative method of disallowing the connection of a call originated by a calling customer through the toll network when the billing number involved with the call has a predetermined status such as delinquent payment. The toll network, also commonly known as a toll interconnect carrier network, serves a plurality of local exchange carrier networks, such as 120 and 121, and a plurality of customers, such as those at telephone station sets 101 and 102. Each of the local networks includes one or more local telephone offices, such as 103 and 104. The toll network includes a plurality of communication lines, such as trunks 153-157, for carrying calls between the local exchange carrier networks. The toll network also includes toll offices, such as 105-107, for selectively interconnecting the trunks in response to routing information, such as the telephone number of the called customer line provided by the calling customer. Toll offices 105 and 107 serve local offices 103 and 104 via trunks 155 through 157, as shown. Each of local offices 103 and 104 serves a plurality of customers via station sets, such as 101 and 102, connected to customer communication lines, such as 151 and 152. All of the customers served by a local office may not be served by the same interconnect carrier network. In fact, many local networks and the offices contained therein are served by several different interconnect carrier networks each of which serves a different group of subscribing customers.

The toll network further includes data base 108 that stores billing information and processes billing information requests for the customers served by the toll network. In response to a call originated by a calling customer for connection through the toll network, the toll office receiving the call sends to the data base a query message to determine the status of the billing number involved with the call. In response to the query message, the data base obtains the status of the billing number involved with the call to selectively allow and disallow the connection of the call through the toll network. Data base 108 comprises processor 112 and disk storage memory 113 interconnected by common network interface communication ring 114 that are commercially available along with a system of programs to store, update, and process billing information in the memory. The common network interface communication ring is also equipped with CCIS facilities for communication with signal transfer points and the toll offices. The billing information stored in data base 108 may also be entered and updated from a well-known remotely located accounting and billing administrative office 115 via data link 165. The memory stores the billing information for obtaining the status of a billing number involved with a call originated by a calling customer. Depending on the obtained status of the billing number involved with a call, the processor sends one of several reply messages to effect the disallowance or allowance of the call. For example, when the billing information includes a list of billing numbers having a delinquent payment status, the processor sends a "deny call" reply message to the toll office to disallow the extension of the call through the toll network when the billing number involved with the call is in the list. Alternatively, the billing information could include the billing number and status of every customer served by the toll network. As a result, the processor sends either an "allow call" or "deny call" reply message to the toll office to allow or disallow the connection of the call through the toll network depending on the obtained status of the billing number involved with the call.

The toll network also includes a well-known common channel signaling (CCS) system, also known as a common channel interoffice signaling (CCIS) system, for transferring messages indicative of selected billing information between data base 108 and the toll offices. The CCIS system includes signal transfer points (STP) 109-111 and CCIS data links 158-164 interconnected as shown. The CCIS system is also used to transfer messages indicative of other information between toll offices, such as well-known control, routing, and supervisory information. The CCIS system transfers billing, control, routing, and supervisory information messages separate from the voice and data messages that are transferred on trunks 153 and 154. A typical CCIS system is described in The Bell System Technical Journal, Volume 57, No. 2, February, 1978, and in U. S. Patent No. 3,624,613. Substitution of the 2STP system commercially available from AT&T for the 1STP system described in the cited CCIS system reference is recommended for high volume message applications.

By way of example, each of local telephone offices 103 and 104 is suitably an electronic program-controlled switching system of the type disclosed in U.S. Patent No. 3,570,008, and similarly disclosed in The Bell System Technical Journal, Vol. 43, No. 5, Parts I and II, September, 1964. An updated central processor suitable for use in these switching systems is described in The Bell System Technical Journal, Volume 56, No. 2, February, 1977. The cited references may be consulted for a more comprehensive understanding of the construction and operation of an electronic program-controlled local switching system. These switching systems process calls for customers switched or directly connected thereto.

In response to a call originated by a calling customer at station set 101 to a called customer at station set 102, local telephone office 103 forwards to toll office 105 routing information provided by the calling customer, such as the telephone number of called customer line 152. Local office 103 also sends billing information for the calling customer, such as the billing number involved with the call. The billing number involved with the call typically comprises the line identification number of the calling line, commonly known as the telephone number of the line. Alternatively, the customer may enter a billing number such as a credit or calling card number or other personal identification that is sent to the toll office instead of the calling line telephone number. In addition, the entered billing number may be the billing number of a third party or that of the called customer, such as in a collect telephone call.

Each of toll offices 105-107 includes a stored program-controlled switching system 122, such as the 4ESS™ digital switch with common channel interoffice signaling (CCIS) facilities. This digital switch is described in detail in The Bell System Technical Journal, Volume 56, No. 7, September, 1977, and Volume 60, No. 6, Part II, July-August, 1981. These references may be consulted for a more comprehensive understanding of the construction and operations of a toll switching system.

Each of toll offices 105-107 may also include an operator system such as 123 or have access to a remotely located operator system for processing operator-assisted calls. A typical operator system, such as the traffic service position system for use with local and toll offices, is described in the The Bell System Technical Journal, Volume 49, No. 10, December, 1970, and Volume 58, No. 6, Part 1 of 2, July-August, 1979, and in U. S. Patent No. 3,484,560.

In response to a call originated by a calling customer and received from a local office, the switching or operator system of a toll office sends a CCIS query message to the data base and receives from the data base a CCIS reply message indicative of the status of the billing number involved with the call. The query message includes the billing number involved with the call that is received from the local office and a call identifier that is provided by the switching or operator system to identify the call.

In response to the query message from the toll office, the data base interrogates its memory to obtain the status of the billing number involved with the call. By way of example, when the billing number involved with the call has a delinquent payment status, such as when the customer is delinquent in paying toll network charges, the data base sends a CCIS "deny call" reply message to the toll office to disallow the extension of the call through the toll network. In addition, when the toll office also includes an operator system, a CCIS "allow call" reply message is sent to the operator system when the the billing number involved with the call has a status, for example, other than delinquent payment. Furthermore, the data base may also contain other information such as billing charges, credit limits, allowed customer services, etc. for each billing number associated with a customer or customer line served by the toll network. This information may be utilized by the switching or operator system of a toll office to provide other network services.

In response to receiving the "deny call" reply message from the data base, toll office 105 disallows the connection of the call through the toll network and announces to the calling customer the disallowance of the call through the toll network. This announcement is stored in well-known recorded announcement equipment of the switching system and is intended to discourage the calling customer from making further call attempts through the toll network that will likewise be disallowed and only serve to congest the toll network. In addition, the announcement may direct the customer to call an "800" service number to receive information concerning his billing number. Normally, a customer would be given ample notice concerning payment of delinquent charges before the connection of toll network calls would be disallowed or denied.

When the toll office also includes or utilizes an operator system, an operator associated therewith may offer the calling customer alternate billing arrangements to allow the connection of the call through the toll network when a "deny call" deny message is initially received from the data base. These alternate billing arrangements may include billing to a second, different, billing number; reversing the charges to the called customer telephone number; billing to a third party billing number; or billing to a personal identification number of the calling customer. By way of example, when the operator receives a second billing number from the customer, a second query message is sent to the data base to obtain the status thereof. When the status of the billing number is, for example, not delinquent, the data base sends an "allow call" reply message to the operator system which in turn forwards the call to the toll switching system to switch the call through the toll network.

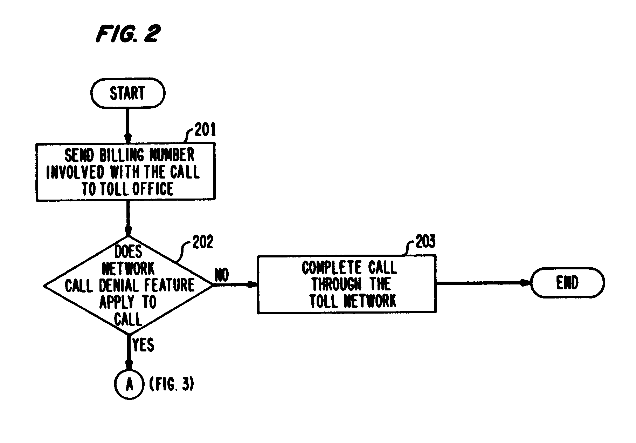

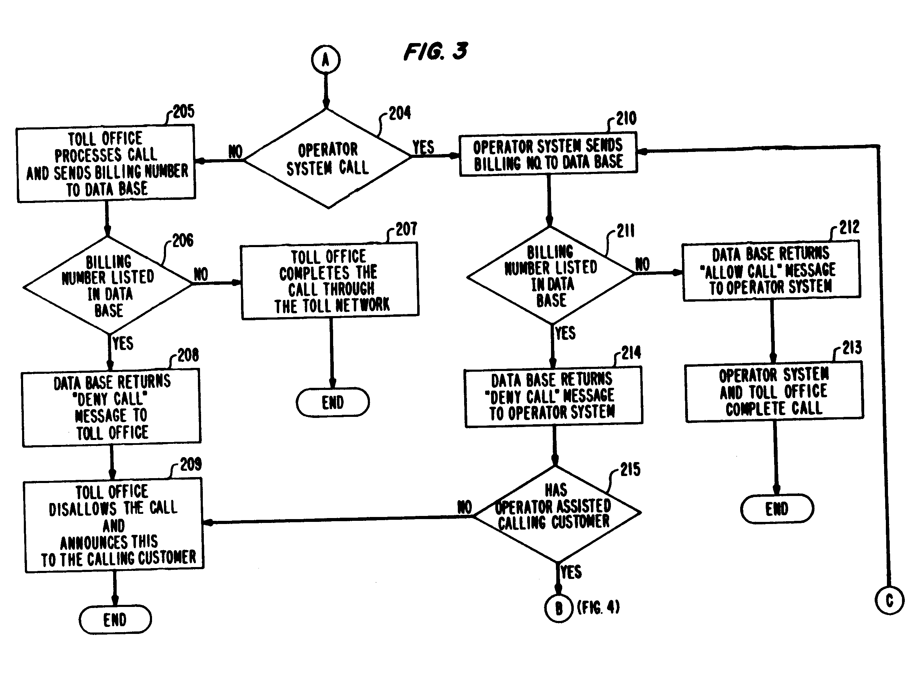

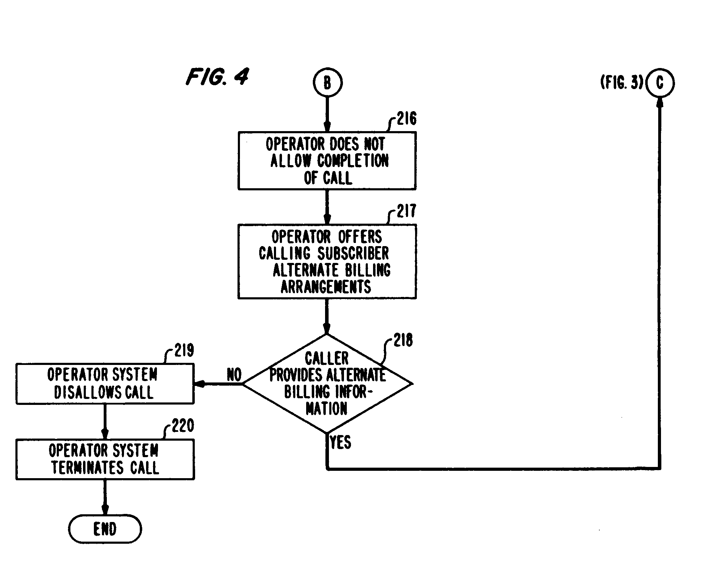

Depicted in FIGS. 2 through 4 is a flow diagram illustrating one implementation of the method of disallowing the extension of a call originated by a calling customer through the toll network illustrated in FIG. 1 when the billing number involved with the call has a predetermined status, such as delinquent payment. This method of disallowing the connection of a call through a network may also be referred to as a network call denial feature. For purposes of illustration, it is assumed that a calling customer at station set 101 wishes to place a call through the toll network to the called customer at station set 102. To originate the call, the calling customer lifts the handset of station set 101, which together with calling line 151 assumes a well-known "off-hook" supervisory state, and enters the telephone number of called customer line 152 in a well-known manner. Local office 103 detects the "off-hook" supervisory state of the calling station set and line and collects the entered digits of the telephone number of the called line. Local office 103 analyzes the telephone number of the called line and determines that the call must be forwarded to toll office 105 via direct trunk 156. After exchanging a series of well-known supervisory signals with toll office 105, local office 103 forwards the called line telephone number to the toll office to extend the call through the toll network to called customer line 152 and station set 102. In addition, local office 103 also sends the billing number involved with the call to toll office 105 (block 201). Unless the customer has entered an alternate billing number, the local office sends the telephone number of the calling line as the billing number involved with the call. This process is known as and commonly referred to as automatic number identification (ANI). Either one or both of local office 103 and toll office 105 may record and bill the billing number involved with the call. In response to receiving the billing number involved with the call, the toll office first determines whether the network call denial feature is applicable to the call (block 202).

By way of example, Table 1 lists those types of calls to which the network call denial feature does not apply. As shown, this determination is based on one or more criteria as indicated by an (x) adjacent to the type of call in the table: incoming trunk (ICT) identification, calling line identification, and called line identification. For instance, when the call is an inward wide area telephone or "800" service call, the called line is charged for the call. Thus, a billing number status check of the calling line is not necessary. In addition, when the call is placed from, for example, a direct interconnect private branch exchange (PBX) or a cellular radio, a billing number status check of the calling line is also not necessary. Thus, as shown in blocks 202 and 203 of FIG. 2, when the type of call is listed in Table 1, the network call denial feature does not apply, and the connection of the call through the toll network is allowed. As a result, the call is switched and completed through the toll network in a well-known manner.

## TABLE 1

| TYPE OF CALL | A | B | C |
|---|---|---|---|
| 1. Direct Interconnect PBX | X | | |
| 2. Direct Interconnect Cellular Radio | X | | |
| 3. International Carrier (INC) Calls | | | X |
| 4. "800" Calls (INWATS) | | | X |
| 5. SDN Calls | X | | |
| 6. Coin-Paid Calls | X | | |
| 7. Telco Calls Handled By A Shared AT&T-C Switch | | X | X |
| 8. AT&T-C International Collect Call | | | X |
| 9. Operator Special Dial Codes | | | X |

6

| 10. Special Billing Numbers | | X | |
|---|---|---|---|
| 11. 900-200-XXXX Calls | | | X |
| 12. Direct Connect Outwats Calls | X | | |
| 13. Switched Access Outwats Calls | X | X | |

A = ICT

B = CALLING LINE ID

C = CALLED LINE ID

Local office 103 determines whether the call requires the assistance of an operator system by examining the first digit provided by the calling customer (block 204). A first digit "0" typically indicates an operator-assistance call with the use of an operator system. A first digit "1" typically indicates a direct-dial long distance telephone call.

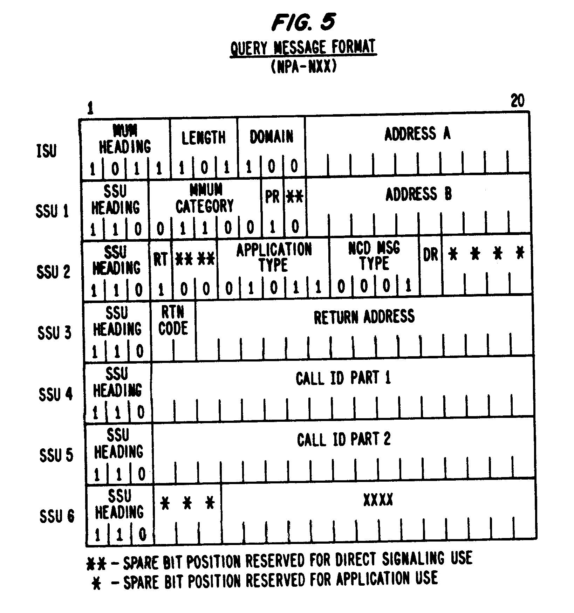

When the call is a direct-dial call, toll office 105 receives the call on the termination of a direct trunk such as trunk 156 from local office 103 and processes the call in a well-known manner. In addition, the toll office sends the billing number involved with the call in a CCIS query message to data base 108 via signal transfer point 109 and 110 (block 205). Depicted in FIG. 5 is the format of an illustrative CCIS query message. The CCIS query message is in the well-known CCIS6 message format and includes the billing number involved with the call in the ADDRESS A and B fields, a call identifier in the CALL ID PART 1 and 2 fields, and a demand response indicator in the DR field. The demand response indicator specifies whether only a "deny call" reply message need be returned when the extension of the call through the toll network is to be disallowed or whether a "deny call" or "allow call" reply message must be returned regardless of the call disposition. Table II lists the fields of the query message depicted in FIG. 5.

## Table II

### Query Message Field Content (NPA-NXX)

A. __Domain__ - bits 8-10/ISU

The domain field specifies how the address A and address B fields should be interpreted to route the message through the network.

    100          Network Call Denial Application

B. __Address A__ - bits 11-20/ISU

Address field A contains the NPA (in binary) of the billing number.

C. __Address B__ - bits 11-20/1SSU

Address Field B contains the NXX (in binary) of the billing number.

D. __Direct Signaling Application Type__ - bits 7-11/2SSU

The Direct Signaling Application Type identifies the application that uses a given message.

    01011        Network Call Denial

E. __NCD Message Type__ - bits 12-15/2SSU

The NCD Message Type indicates that this message is a query.

    0001        NCD Query - Billing number of the NPA-NXX type

F. __Demand Response Indicator__ - bit 16/2SSU

The Demand Response Indicator informs the NCP whether a reply message is required.

    0         Response only if call is to be denied

    1         Always respond, regardless of call disposition

G. __Call Identifier Part 1__ - bits 4-20/4SSU

This field holds the first part of the call identifier assigned by the originating switching office.

H. __Call Identifier Part 2__ - bits 4-20/5SSU

```
This field holds the second part of the call identifier
assigned by the originating switching office.

I. XXXX - bits 7-20/6SSU

This field holds the last four digits (in binary) of the
ten-digit billing number.
```

As previously described, the billing number commonly involved with a call is the telephone number of the calling line. The demand response indicator from a toll switching system specifies that a "deny call" reply message be returned only when the billing number involved with the identified call has a predetermined status such as delinquent payment. Upon receiving the query message, data base 108 interrogates its memory in a well-known manner to obtain the status of the billing number involved with the call.

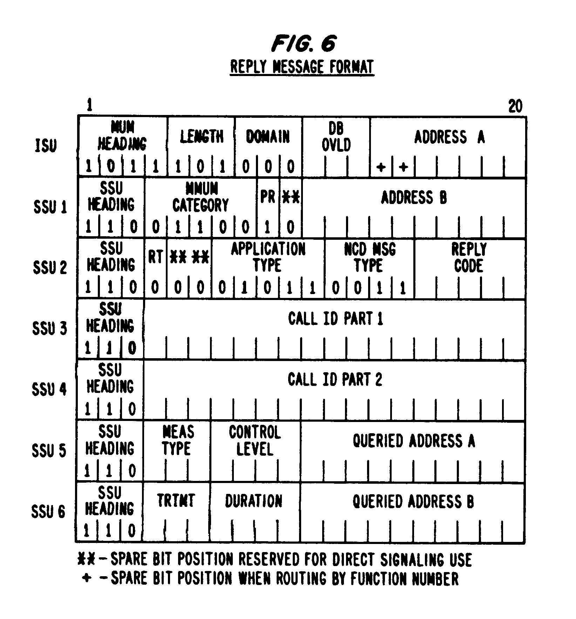

The data base may store billing numbers in at least two different ways. First, only those billing numbers of customers having a predetermined status such as delinquent payment are stored in the data base. Thus, for example, when the billing number involved with the call is in the data base list, the data base sends to the toll office a "deny call" reply message to disallow the connection of the call through the toll network. Second, the data base may store the billing numbers of all customers served by the network in its memory. In this case, when a query message is received from a toll office, the data base interrogates its memory to obtain the status or other information stored with the billing number and sends a reply message, such as a "deny call" or "allow call" message, depending on the stored status or information. Depicted in FIG. 6 is the format of an illustrative CCIS reply message. Table III lists the field of the reply message depicted in FIG. 6.

EP 0 212 654 B1

## TABLE III

### Reply Message Content

A. **Domain** - bits 8-10/ISU

The domain field specifies how the address A and address B fields should be interpreted to route the message through the network.

    000           Function Number

B. **DB OVLD** - bits 11-13/ISU

The data base overload (DB OVLD) level is obtained in this field. The values range from 000 (normal condition) to 111 (severest overload).

C. **Address A** - bits 16-20/ISU

This field contains the five high-order bits of the return address.

D. **Address B** - bits 11-20/1SSU

Address field B contains the remaining low-order 10-bits of the return address (function number).

E. **Direct Signaling Application Type** - bits 7-11/2SSU

The Direct Signaling Application Type identifies the application that uses a given message.

    01011          Network Call Denial

F. **NCD Message Type** - bits 12-15/2SSU

The NCD Message Type indicates that this is a reply message.

    0011           NCD Reply Message

G. **Reply Code** bits 16-20/2SSU

The reply code indicates the results of NCD query processing.

| | |
|---|---|
| 00000 | Unable to process - miscellaneous reasons |
| 00001 | Unable to process - overload |
| 00010 | Allow AT&T-C call |
| 00011 | Deny AT&T-C call |

H. **Call Identification Part I** - bits 4-20/3SSU

10

This field contains the Call Identification Part I that was received in the associated query message.

I. Call Identification Part 2 - bits 4-20/4SSU

This field contains the Call Identification Part 2 that was received in the associated query message.

J. Measurement Type - bits 4-6/5SSU

This field (MEAS. TYPE) indicates the reason why the control is being requested. The field assignments are:

| | |
|---|---|
| 000 | NCD/NCP overload |
| 001 | NOCS-initiated control (assigned for possible future use) |
| 010-111 | Unassigned |

K. Control Level - bits 7-10/5SSU

This field contains the NCP overload control level for use by switches using a call gapping control for NCP overloads.

L. Queried Address A - bits 11-20/5SSU

This field contains the data that was received in the address A field of the associated query message.

M. Treatment Type - bits 4-6/6SSU

This field (TRTMT) is reserved for future NCD use.

N. Control Duration - bits 7-10/6SSU

This field contains the NCP overload control duration level for use by switches using a call gapping control for NCP overloads.

O. Queried Address B - bits 11-20/6SSU

This field contains the data that was received in the address B field of the associated query message.

In this illustrative embodiment, only those billing numbers having a predetermined status, such as delinquent payment, are stored in the data base memory. When the billing number involved with the call is not in the data base list ("no" leg of block 206), the data base does not return a reply message, and the toll office switches and completes the extension of the call through the network (block 207).

When the billing number of the calling customer is in the data base list ("yes" leg of block 206), the data base returns a "deny call" reply message to toll office 105 (block 208). The query and reply messages also include information to identify the particular call. Upon receiving the "deny call" reply message, toll office 105 disallows the extension of the call through the network. In addition, the toll office announces the call disallowance to the calling customer (block 209). The toll office may also announce to call a telephone number for more information concerning the call disallowance. After the announcements are made, the toll office disconnects the call. The calling customer now has the option of attempting another call to the same called customer and receiving the same announcement or calling the called customer with the aid of an operator system.

As previously indicated, the calling customer may initially enlist the aid of an operator system by first dialing a digit "0" followed by the called customer number. When the calling customer enlists the aid of an operator system, as indicated by the "yes" leg of decision block 204, local office 103 forwards the call to the operator system 123 via trunk 155, which in turn sends a query message to data base 108 (block 210). This query message again includes the billing number of the calling customer, a call identifier, and a demand response indicator.

Upon receiving the query message, the data base searches its list of delinquent payment status billing numbers for the billing number involved with the call (block 211). When the billing number involved with the call is not in the list, as indicated by the "no" leg of decision block 211, the data base returns a CCIS "allow call" reply message to operator system 123 to allow the extension of the call through the toll network (block 212). The operator system forwards the call via trunk 155 to switching system 122 to switch and complete the connection of the call through the toll network(block 213).

When the billing number involved with the call is in the data base list of delinquent payment status billing numbers as depicted in the "yes" leg of decision block 211, data base 108 returns a "deny call" reply message to operator system 123 to disallow the connection of the call through the toll network (block 214). When an operator has not assisted the calling customer, such as with an operator system utilizing recorded announcements as depicted by the "no" leg of decision block 215, the operator system disallows the connection of the call through the toll network and announces the call disallowance to the calling customer as previously described (block 209).

When an operator has actually assisted the calling customer as depicted by the "yes" leg of decision block 215, the operator does not initially allow completion of the call through the toll network (block 216). However, the operator does offer the calling customer alternate billing arrangements (block 217). These alternate arrangements include billing the call to a credit or calling card number, a third party billing number, or a personal identification number that does not have a delinquent payment status. In addition, the calling customer may decide to place a "collect" call to the called customer. Upon receiving an alternate billing number from the calling customer, as depicted by the "yes" leg of decision block 218, the operator causes the operator system to send the alternate billing number in another query message to data base 108 to search its list for the alternate billing number. After the search, the data base returns either an "allow call" or "deny call" reply message depending on whether or not the alternate billing number from the calling customer is in the data base list.

When the calling customer does not provide an alternate billing number or arrangements for the call, as depicted by the "no" leg of decision block 218, the operator system disallows the connection of the call through the toll network (block 219) and terminates the call (block 220).

It is to be understood that the above-described method and apparatus for disallowing the connection of a call originated by a calling customer through a toll network is merely an illustrative embodiment of the principles of this invention and that numerous other arrangements may be devised by those skilled in the art without departing from scope of this invention. In particular, the data base may contain the billing numbers of all customers served by the toll network. In this case, either a "deny call" or "allow call" reply message is always returned. In addition, this complete customer billing number list may be used to establish credit limits, gather billing information concerning charges for each call, or provide other billing information associated with each customer or customer line.

**Claims**

1. For use with a telecommunications network (100) serving a plurality of systems (103, 105) serving a plurality of customer lines, a method utilized by one of said systems of disallowing an extension through said network of a call originated from a calling one of said customer lines (151), comprising the steps of:

   determining the status (205, 206, 207, 208) of a billing number from a data base shared by said systems and having the status of a plurality of billing numbers in response to said call; and
   disallowing (209) said extension of said call through said network when said billing number has a predetermined status;
   characterized in that
   a system (103) connected to said calling customer line determines a customer billing number of said customer line (151);
   said customer billing number is used by said data base for determining said status (205, 208);
   allowing said extension of said call through said network when said billing number has a second

12

EP 0 212 654 B1

predetermined status (207);
determining the status of a second billing number when said extension of said call through said network has been disallowing and allowing said extension of said call through said network when said second billing number has a second predetermined status (218, 210, 211, 212, 213).

2. The method of claim 1 where said step of determining is further characterized in that it comprises the steps of: sending said billing number to said data base (205); and receiving a reply message from said data base (208) for disallowing said extension of said call through said network when said billing number has said predetermined status.

3. The method of claim 1 is further characterized in comprising the step of sending a message (209) to said calling customer line for announcing a disallowance of said call through said network when said billing number has said predetermined status.

4. An interconnect carrier network for carrying out the method of claim 1 comprising:
system means (105) for serving a plurality of switching systems (103) processing calls for a plurality of customer lines (151); and
data base means (108) shared by said system means and having the status of a plurality of billing numbers and responsive to a call originated from a calling one of said customer lines for extension through said network for obtaining the status of a billing number for selectively allowing or disallowing said extension of said call through said network when said billing number has a predetermined status;
characterized in that
said system means comprises means for receiving a billing number identifying said calling customer line (201);
wherein said billing number to which said data base means is responsive (205, 206, 207, 208, 210, 211, 212, 214) is said billing number identifying said calling customer line,
said system means further comprises means for receiving and determining the status of a second billing number when said extension of said call through said network has been disallowed and allowing said extension of said call through said network when said second billing number has a second predetermined status (218, 210, 211, 212, 213).

**Patentansprüche**

1. Verfahren zur Verwendung in Verbindung mit einem Nachrichtenübertragungsnetzwerk (100), das eine Vielzahl von Anlagen (103, 105) bedient, die eine Vielzahl von Teilnehmerleitungen versorgen, wobei das Verfahren von einer der Anlagen benutzt wird, um die Weiterleitung einer von einer rufenden Teilnehmerleitung (151) ausgehenden Verbindung zu verweigern, mit den Schritten:
unter Ansprechen auf die Verbindung Feststellen des Zustandes (205, 206, 207, 208) einer Gebührenbelastungsnummer aus einer von den Anlagen gemeinsam benutzten Datenbasis, die den Zustand einer Vielzahl von Gebührenbelastungsnummern enthält, und
Verweigern (209) der Weiterführung der Verbindung über das Netzwerk, wenn die Gebührenbelastungsnummer einen vorbestimmten Zustand hat,
dadurch gekennzeichnet, daß
die an die rufende Teilnehmer angeschaltete Anlage (103) eine Teilnehmer-Gebührenbelastungsnummer für die Teilnehmerleitung (191) feststellt,
daß die Teilnehmer-Gebührenbelastungsnummer von der Datenbasis zur Bestimmung des Zustandes benutzt wird (205, 208),
daß die Weiterleitung der Verbindung über das Netzwerk erlaubt wird, wenn die Gebührenbelastungsnummer einen zweiten vorbestimmten Zustand (207) hat, und
daß der Zustand einer zweiten Gebührenbelastungsnummer bestimmt wird, wenn die Weiterleitung der Verbindung über das Netzwerk verweigert worden ist, und die Weiterleitung der Verbindung über das Netzwerk erlaubt wird, wenn die zweite Gebührenbelastungsnummer einen zweiten vorbestimmten Zustand hat (218, 210, 211, 212, 213).

2. Verfahren nach Anspruch 1, bei dem der Feststellungsschritt ferner dadurch gekennzeichnet, daß er die Schritte umfaßt:
Aussenden (205) der Gebührenbelastungsnummer an die Datenbasis und Empfangen (208) einer Antwortnachricht von der Datenbasis, um die Weiterführung der Verbindung über das Netzwerk zu verweigern, wenn die Gebührenbelastungsnummer den vorbestimmten Zustand hat.

**3.** Verfahren nach Anspruch 1, ferner gekennzeichnet durch Aussenden (209) einer Nachricht an die rufende Teilnehmerleitung, um die Verweigerung der Verbindung über das Netzwerk anzukündigen, wenn die Gebührenbelastungsnummer den vorbestimmten Zustand hat.

**4.** Untereinander verbundenes Trägernetzwerk zur Durchführung des Verfahrens nach Anspruch 1 mit einer Systemeinrichtung (105) zur Bedienung einer Vielzahl von Vermittlungsanlagen (103), die Verbindungen für eine Vielzahl von Teilnehmerleitungen (151) verarbeiten, und eine von der Systemeinrichtung gemeinsam benutzte Datenbasis (108), die den Zustand einer Vielzahl von Gebührenbelastungsnummern enthält und unter Ansprechen auf eine von einer rufenden Teilnehmerleitung ausgehenden Verbindung für eine Weiterleitung über das Netzwerk den Zustand einer Gebührenbelastungsnummer gewinnt, um selektiv die Weiterleitung der Verbindung über das Netzwerk zu erlauben oder zu verweigern, wenn die Gebührenbelastungsnummer einen vorbestimmten Zustand hat,
dadurch gekennzeichnet, daß
die Systemeinrichtung eine Einrichtung zum Empfang einer die rufende Teilnehmerleitung identifizierenden Gebührenbelastungseinrichtung umfaßt (201),
daß die Gebührenbelastungsnummer, auf die die Datenbasis anspricht (205, 206, 207, 208, 210, 211, 212, 214), die Gebührenbelastungsnummer ist, die die rufende Teilnehmerleitung identifiziert, und
daß die Systemeinrichtung ferner eine Einrichtung für den Empfang und für die Bestimmung des Zustandes einer zweiten Gebührenbelastungsnummer aufweist, wenn die Weiterleitung der Verbindung über das Netzwerk verweigert worden ist, und die Weiterleitung der Verbindung über das Netzwerk gestattet, wenn die zweite Gebührenbelastungsnummer einen zweiten vorbestimmten Zustand besitzt (218, 210, 211, 212, 213).

**Revendications**

**1.** Un procédé pour l'utilisation avec un réseau de télécommunications (100) desservant un ensemble de systèmes (103, 105) qui desservent un ensemble de lignes d'abonnés, ce procédé étant utilisé par l'un des systèmes précités pour interdire la transmission par le réseau d'un appel qui provient d'une ligne appelante parmi les lignes d'abonnés (151), comprenant les étapes suivantes :
sous l'effet de l'appel précité, on détermine l'état (205, 206, 207, 208) d'un numéro de facturation, à partir d'une base de données qui est utilisée en commun par les systèmes précités et qui contient l'état d'un ensemble de numéros de facturation; et
on interdit (209) la transmission de l'appel à travers le réseau lorsque le numéro de facturation a un état prédéterminé;
caractérisé en ce que
un système (103) connecté à la ligne d'abonné appelante détermine un numéro de facturation d'abonné de cette ligne d'abonné (151);
la base de données utilise ce numéro de facturation d'abonné pour déterminer l'état précité (205, 208);
on autorise la transmission de l'appel à travers le réseau lorsque le numéro de facturation a un second état prédéterminé (207);
on détermine l'état d'un second numéro de facturation lorsque la transmission de l'appel à travers le réseau a été interdite, et on autorise la transmission de l'appel à travers le réseau lorsque le second numéro de facturation a un second état prédéterminé (218, 210, 211, 212, 213).

**2.** Le procédé de la revendication 1, dans lequel l'étape de détermination est en outre caractérisée en ce qu'elle comprend les étapes suivantes :
on émet le numéro de facturation vers la base de données (205); et
on reçoit un message de réponse à partir de la base de données (208) pour interdire la transmission de l'appel à travers le réseau lorsque le numéro de facturation a l'état prédéterminé.

**3.** Le procédé de la revendication 1, caractérisé en outre en ce qu'il comprend l'étape qui consiste à émettre un message (209) vers la ligne d'abonné appelante pour annoncer une interdiction de la transmission de l'appel à travers le réseau lorsque le numéro de facturation a l'état prédéterminé.

**4.** Un réseau de télécommunication à longue distance pour l'interconnexion de réseaux d'exploitants locaux, pour la mise en oeuvre du procédé de la revendication 1, comprenant :

des moyens d'interconnexion de systèmes (105) pour desservir un ensemble de systèmes de commutation (103) qui traitent des appels ou un ensemble de lignes d'abonnés (151); et

une structure de base de données (108) utilisée en commun par les moyens d'interconnexion de systèmes et contenant l'état d'un ensemble de numéros de facturation, et réagissant à un appel qui provient d'une ligne appelante parmi les lignes d'abonnés et qui doit être transmis à travers le réseau, en obtenant l'état d'un numéro de facturation, pour autoriser ou interdire sélectivement la transmission de l'appel à travers le réseau lorsque le numéro de facturation a un état prédéterminé;

caractérisé en ce que

les moyens d'interconnexion de systèmes comprennent des moyens qui sont destinés à recevoir un numéro de facturation identifiant la ligne d'abonné appelante (201);

le numéro de facturation auquel réagit la structure de base de données (205, 206, 207, 208, 210, 211, 212, 214) est le numéro de facturation qui identifie la ligne d'abonné appelante,

les moyens d'interconnexion de systèmes comprennent en outre des moyens qui sont destinés à recevoir et à déterminer l'état d'un second numéro de facturation lorsque la transmission de l'appel à travers le réseau a été interdite, et à autoriser la transmission de l'appel à travers le réseau lorsque le second numéro de facturation a un second état prédéterminé (218, 220, 211, 212, 213).

**FIG. 1**

EP 0 212 654 B1

FIG. 2

START

201 — SEND BILLING NUMBER INVOLVED WITH THE CALL TO TOLL OFFICE

202 — DOES NETWORK CALL DENIAL FEATURE APPLY TO CALL

NO

203 — COMPLETE CALL THROUGH THE TOLL NETWORK

END

YES

A (FIG. 3)

# FIG. 3

(A)

**205**
TOLL OFFICE PROCESSES CALL AND SENDS BILLING NUMBER TO DATA BASE

NO ← **204** OPERATOR SYSTEM CALL → YES

**210**
OPERATOR SYSTEM SENDS BILLING NO. TO DATA BASE

**206**
BILLING NUMBER LISTED IN DATA BASE

NO → **207** TOLL OFFICE COMPLETES THE CALL THROUGH THE TOLL NETWORK → END

**211**
BILLING NUMBER LISTED IN DATA BASE

NO → **212** DATA BASE RETURNS "ALLOW CALL" MESSAGE TO OPERATOR SYSTEM

YES ↓ (from 206)

**208**
DATA BASE RETURNS "DENY CALL" MESSAGE TO TOLL OFFICE

YES ↓ (from 211)

**214**
DATA BASE RETURNS "DENY CALL" MESSAGE TO OPERATOR SYSTEM

**213**
OPERATOR SYSTEM AND TOLL OFFICE COMPLETE CALL → END

**209**
TOLL OFFICE DISALLOWS THE CALL AND ANNOUNCES THIS TO THE CALLING CUSTOMER → END

**215**
HAS OPERATOR ASSISTED CALLING CUSTOMER

NO → (to 209)

YES → (B) (FIG. 4)

(C)

EP 0 212 654 B1

18

*FIG. 4*

(FIG. 3) C

B

216
OPERATOR DOES NOT ALLOW COMPLETION OF CALL

217
OPERATOR OFFERS CALLING SUBSCRIBER ALTERNATE BILLING ARRANGEMENTS

218
CALLER PROVIDES ALTERNATE BILLING INFORMATION

YES

NO

219
OPERATOR SYSTEM DISALLOWS CALL

220
OPERATOR SYSTEM TERMINATES CALL

END

## *FIG. 5*

### QUERY MESSAGE FORMAT
### (NPA-NXX)

| | | | | | | | | | | | | | | | | | | | | |
|---|---|---|---|---|---|---|---|---|---|---|---|---|---|---|---|---|---|---|---|---|

**1** ... **20**

**ISU**

| MUM HEADING | | | | LENGTH | | | DOMAIN | | | ADDRESS A | | | | | | | | | | |
|---|---|---|---|---|---|---|---|---|---|---|---|---|---|---|---|---|---|---|---|---|
| 1 | 0 | 1 | 1 | 1 | 0 | 1 | 1 | 0 | 0 | | | | | | | | | | | |

**SSU 1**

| SSU HEADING | | | MMUM CATEGORY | | | | PR | ** | | ADDRESS B |
|---|---|---|---|---|---|---|---|---|---|---|
| 1 | 1 | 0 | 0 | 1 | 1 | 0 | 0 | 1 | 0 | |

**SSU 2**

| SSU HEADING | | | RT | ** | ** | APPLICATION TYPE | | | NCD MSG TYPE | | | | DR | * | * | * | * |
|---|---|---|---|---|---|---|---|---|---|---|---|---|---|---|---|---|---|
| 1 | 1 | 0 | 1 | 0 | 0 | 0 | 1 | 0 | 1 | 1 | 0 | 0 | 0 | 1 | | | |

**SSU 3**

| SSU HEADING | | | RTN CODE | RETURN ADDRESS |
|---|---|---|---|---|
| 1 | 1 | 0 | | |

**SSU 4**

| SSU HEADING | | | CALL ID PART 1 |
|---|---|---|---|
| 1 | 1 | 0 | |

**SSU 5**

| SSU HEADING | | | CALL ID PART 2 |
|---|---|---|---|
| 1 | 1 | 0 | |

**SSU 6**

| SSU HEADING | | | * | * | * | XXXX |
|---|---|---|---|---|---|---|
| 1 | 1 | 0 | | | | |

** – SPARE BIT POSITION RESERVED FOR DIRECT SIGNALING USE
* – SPARE BIT POSITION RESERVED FOR APPLICATION USE

EP 0 212 654 B1

## FIG. 6
### REPLY MESSAGE FORMAT

**✱✱ –** SPARE BIT POSITION RESERVED FOR DIRECT SIGNALING USE
**✦ –** SPARE BIT POSITION WHEN ROUTING BY FUNCTION NUMBER